# EUROPEAN PATENT APPLICATION

(11) **EP 4 763 462 A1**
(43) Date of publication of application: **24.06.2026**
(21) Application number: 25224301.9
(22) Date of filing: 17.12.2025
(51) Int. Cl.: B29C 33/30, B29C 70/38, B22F 12/00, B29C 64/00, B33Y 10/00, B33Y 70/10, B33Y 80/00

(54) **METHOD AND SYSTEM FOR MANUFACTURING AN AEROSTRUCTURE**

(30) Priority: 17.12.2024 US 202463735263 P
(71) Applicant: Electroimpact, Inc., Mukilteo, WA 98275 (US)
(72) Inventor: BISCHOFF, Ryan L., Mukilteo, WA 98275 (US); PURVIS, Andrew J., Mukilteo, WA 98275 (US); ZIEVE, Michael M., Mukilteo, WA 98275 (US)
(74) Representative: Meissner Bolte Partnerschaft mbB

(57) **Abstract**

An additive manufacturing machine (AMM) operates within a designated work cell. One or more pre-fabricated primary substructure pieces, produced by a first manufacturing process (which can be additive and/or subtractive), are transferred into the designated AMM work cell. The primary substructure pieces are aligned (optionally using alignment structures like rods or tubes which may be temporary aids or permanent stiffeners) and secured within the work cell, typically to a build surface. The alignment structure(s) may also serve as stiffening structure(s). The AMM subsequently deposits additive material onto the aligned primary substructure, using a second, potentially distinct, additive manufacturing process (for example AFP applying one or more tows of pre-impregnated fiber material, such as carbon fiber-reinforced polymer (CFRP). This deposition integrates the primary substructure pieces, permanent stiffening structure(s), and/or builds additional features. During deposition, process parameters such as a heat source (commonly a laser or an infrared (IR) laser), and a compaction member (like a roller) are used to apply energy and pressure to both the newly applied additive material and/or the existing substrate, facilitating adhesion or welding between the materials and ensuring consolidation. Upon completion of the AMM process, the permanent previously separate primary substructure pieces(s), any permanent alignment/stiffening structure(s), and the applied additive material are unified into a single consolidated part.

## Description

### CROSSREFERENCE TO RELATED APPLICATION

This application claims the benefit of U.S. Provisional Patent Application No. 63/735,263, filed December 17, 2024, which is incorporated by reference herein in its entirety.

### BACKGROUND

Additive manufacturing is frequently used to create aerostructures. Selective laser sintering (SLS), automated fiber placement (AFP), fused filament fabrication (FFF), and directed energy deposition (DED) are some of the methods commonly used. Each additive manufacturing method has its own advantages.

Current manufacturing processes do not integrate multiple additive manufacturing technologies into a single, integrated, additive-manufactured part. Instead, individual components produced with these technologies are combined only during a separate assembly stage, typically using fastening, bonding, or other secondary processes after the individual components are fully formed separately. These additional post-manufacturing assembly steps introduce complexity, potential points of failure, and stress concentration at adjoining surfaces; increase the overall weight of the part, and drive-up production costs.

### SUMMARY OF THE DISCLOSURE

This Summary introduces a selection of concepts in a simplified form in order to provide a basic understanding of some aspects of the present disclosure. This Summary is not an extensive overview of the disclosure, and is not intended to identify key or critical elements of the disclosure or to delineate the scope of the disclosure. This Summary merely presents some of the concepts of the disclosure as a prelude to the Detailed Description provided below.

According to an embodiment, a method of manufacturing using an additive manufacturing machine (AMM), includes an operation of constructing, in one or more first areas using a first manufacturing process, one or more primary substructure pieces that form a primary substructure. The method further includes an operation of conveying the one or more pieces of the primary substructure to a second area constituting an AMM work cell. Further, the method includes an operation of applying additive material directly on, and conforming to, at least a portion of an outer surface of the primary substructure via the AMM, wherein the additive material joins the one or more pieces and/or builds additional features thereon, to obtain a consolidated part.

According to an embodiment, a manufacturing system includes one or more first manufacturing areas each configured to construct, using one or more first manufacturing processes, one or more primary substructure pieces of a primary substructure. A conveyance system is configured to convey each primary substructure piece to a second manufacturing area. An automated fiber placement (AFP) system is disposed in the second manufacturing area and is configured to apply one or more tows to the primary substructure to obtain a consolidated part, the primary substructure having been assembled from the one or more primary substructure pieces.

Further scope of applicability of the present invention will become apparent from the Detailed Description given below. However, it should be understood that the Detailed Description and specific examples, while indicating preferred embodiments of the invention, are given by way of illustration only, since various changes and modifications within the spirit and scope of the invention will become apparent to those skilled in the art from this Detailed Description.

### BRIEF DESCRIPTION OF THE DRAWINGS

These and other objects, features and characteristics of the present disclosure will become more apparent to those skilled in the art from a study of the following Detailed Description in conjunction with the appended claims and drawings, all of which form a part of this specification.

In the drawings:
- Figure 1: is a block diagram illustrating structures used in a manufacturing method, according to an embodiment;
- Figure 2: is a cutaway view of a workpiece, according to an embodiment;
- Figure 3: is a flow chart illustrating a method for additive manufacturing of a structure, according to an embodiment;
- Figure 4: is a partial block diagram illustrating elements of a manufacturing method;
- Figure 5: is a block diagram illustrating structures used in a manufacturing method with a horizontal rotator, according to an embodiment.
- Figure 6: is a schematic diagram illustrating a specific workflow of the manufacturing method, according to an embodiment; and
- Figures 7A, 7B: is a flow diagram illustrating a manufacturing sequence and potential configurations of the resulting consolidated part.

The headings provided herein are for convenience only and do not necessarily affect the scope or meaning of the claimed invention.

In the drawings, the same reference numerals and any acronyms identify elements or acts with the same or similar structure or functionality for ease of understanding and convenience. The drawings will be described in detail in the course of the following Detailed Description.

### DETAILED DESCRIPTION

Various examples of the invention will now be described. The following description provides specific details for a thorough understanding and enabling description of these examples. One skilled in the relevant art will understand, however, that the invention may be practiced without many of these details. Likewise, one skilled in the relevant art will also understand that the invention can include many other obvious features not described in detail herein. Additionally, some well-known structures or functions may not be shown or described in detail below, so as to avoid unnecessarily obscuring the relevant description.

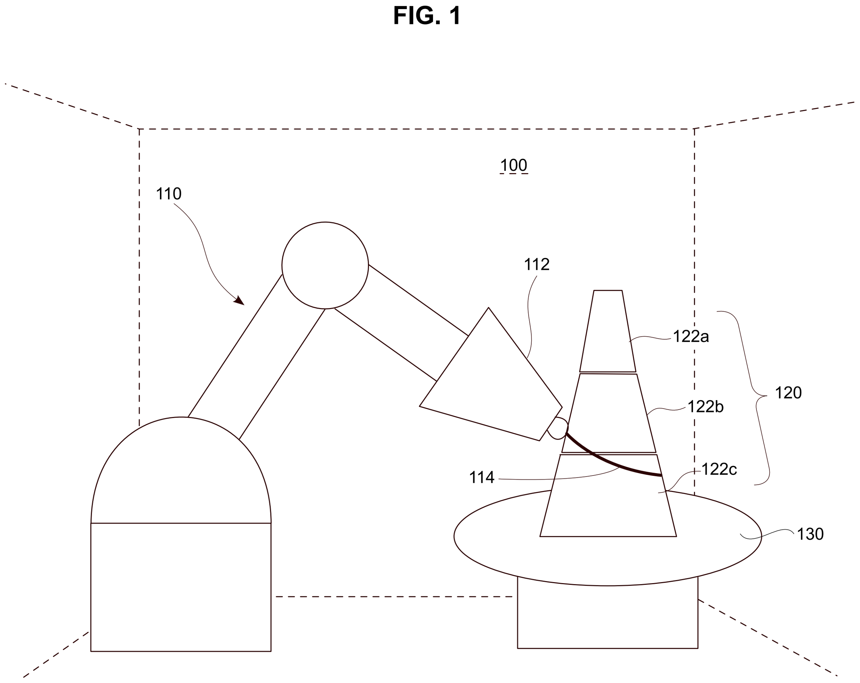

FIG. 1 is a block diagram illustrating structures used in a manufacturing method 300, according to an embodiment. An Additive Manufacturing Machine (AMM) work cell 100 (also referred to herein as "structural integration area", "build area", or "second area") may include an additive manufacturing machine (AMM) 110 having an end effector 112 (also referred to herein as a "head"). The end effector 112 is configured for structural integration by applying new additive material (such as fiber tow 114) onto a workpiece 120 comprising one or more primary substructure pieces 122a, 122b, 122c, where it forms a newly applied layer to join these pieces and/or build additional features, thereby forming a consolidated part.

The end effector 112 may implement any of various additive manufacturing processes suitable for deposition onto the workpiece 120. These processes can fall under several categories, including but not limited to: Material Extrusion (ME) processes such as Fused Filament Fabrication (FFF) configured to apply molten filament or Fused Granular Fabrication (FGF) configured to apply molten granulate (where either FFF or FGF may optionally incorporate reinforcing material such as continuous fiber-e.g., carbon fiber, aramid fiber, fiberglass, basalt fiber, and/or ceramic fibers-within the extruded material or apply such fiber(s) alongside the extrudate); fiber placement processes such as Automated Tape Laying (ATL) configured to apply tape material or Automated Fiber Placement (AFP) configured to apply tows; Directed Energy Deposition (DED) processes configured to apply melted powder or wire material, often metal; or kinetic energy processes such as Cold Spray configured to apply powder particles. In embodiments detailed herein, the end effector 112 comprises an automated fiber placement (AFP) end effector configured to apply one or more instances of fiber tow 114 to the workpiece 120, where the fiber tow 114 may consist of continuous carbon fiber.

The AMM work cell 100 may include a platform or turntable 130 (also referenced as a "build surface", or "build platform") configured to securely hold the workpiece(s) for the AMM 110 to work on. In some embodiments, the platform 130 may include features such as a controller, one or more heaters, and one or more motors and transport mechanisms (not shown) that permit the platform 130 to be adjusted for height, width, angle, and/or rotation. Such adjustment may be programmatically configured and controlled according to integration instructions executed by a controller.

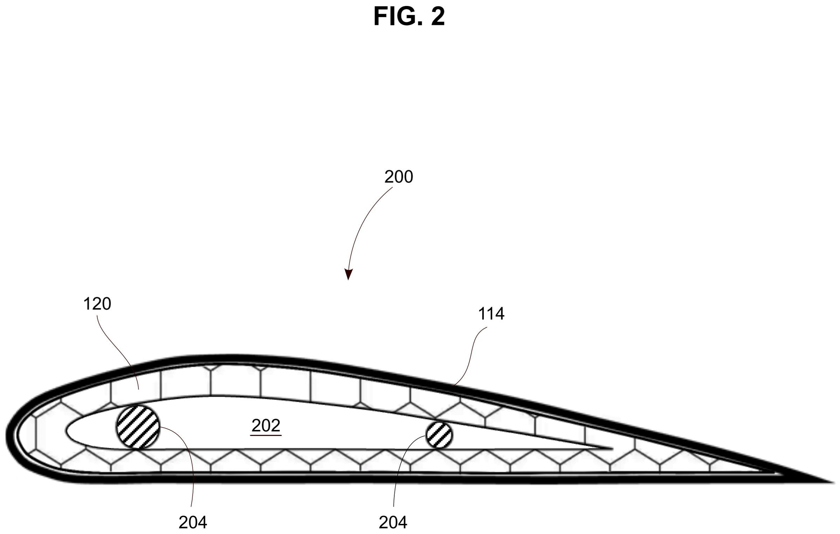

FIG. 2 is cutaway sideview of a consolidated structure 200 formed by the method disclosed herein. The consolidated structure 200 includes a plurality of primary substructure pieces (e.g., 122a, 122b, 122c from Fig. 1) together constituting the workpiece 120. Those having skill in the art will recognize that, while three pieces are used in the figures and description, different numbers of pieces are contemplated and applicable to the structures and methods described herein including just one primary substructure piece or a plurality of primary substructure pieces. One or more alignment structures 204 may be utilized to facilitate alignment of the plurality of pieces and, in some embodiments, to simultaneously serve as stiffening structures for the consolidated structure 200.

Those having skill in the art will recognize that the alignment/stiffening structures 204 may take various shapes and sizes within the scope of this disclosure. The alignment/stiffening structure(s) 204 may include, but are not limited to, spars, rods, tubes, or pipes, mandrels, or splines, and may be applied in an interior cavity 202 of the workpiece 120. The inventors acknowledge that alignment/stiffening structure(s) may be placed in additional and/or different locations according to the engineering needs of the structure and/or integration process, including in a channel in the substructure. In some embodiments, the alignment/stiffening structure(s) 204 may be at least partly made of carbon fiber or other high-performance materials and remain an integral component of the final consolidated part. As used herein, "high-performance materials" refers to a class of materials selected for demanding structural applications, and are characterized primarily by a superior strength-to-weight ratio and/or a high stiffness-to-weight ratio. These properties, which are derived from characteristics including high tensile and shear strength, low density, and excellent fatigue resistance, are critical in applications such as aerospace, automotive, marine, and high-end industrial applications where maximizing mechanical performance while minimizing mass is a key objective. Non-limiting examples of these materials include fiber-reinforced composites like carbon fiber (CFRP), aramid fiber (AFRP), and S-glass (GFRP), as well as high-performance metal alloys like titanium. Accordingly, the applied additive material (e.g., tows), the primary substructure pieces, and/or the alignment structures may comprise a reinforcement material (such as carbon, glass, or aramid fiber) integrated within a matrix material (such as a polymer or metal). In some embodiments, the alignment/support structures 204 and/or the workpiece 120 are configured to permit full or partial separation of the alignment/support structures 204 from the workpiece 120 for various reasons. For example, the alignment/support structure 204 may be employed purely for alignment during manufacturing.

Newly applied additive material, exemplified as a fiber tow 114 in disclosed embodiments illustrated in the current figures, is applied to an outer surface of the aligned one or more primary substructure pieces 122a, 122b, 122c forming the workpiece 120. For example, in some embodiments, the fiber tow 114 may be applied, one piece at a time to the surfaces of the plurality of primary substructure pieces, overlapping the junction of at least two pieces thereby joining the pieces and securing them to each other. In some embodiments, the fiber tows may encase the workpiece 120 to form an integrated shell. Those having skill in the art will recognize that in some implementations, at least one of the primary substructure pieces may serve as sacrificial tooling or as a mandrel. This approach diverges from conventional composite manufacturing, such as AFP, which typically requires the use of a rigid tool or mandrel to define the shape of the part. Such conventional tooling serves only as a temporary manufacturing aid to set the geometry for the applied additive material and is never intended to be part of the final desired part. The present invention is unique in that the primary substructure pieces (e.g., 122a, 122b, 122c) and/or alignment structures (e.g., 204) effectively function as the tooling, with the notable distinctions that these components can be manufactured in separate dedicated manufacturing areas to optimize their characteristics, and more importantly that some, or all of these components can be selectively retained as a permanent, integrated part of the final consolidated structure 200. This allows for a desired end result of either a hollow shell/structure, or a final part where at least one of the primary substructure pieces remains along with the shell that was formed from the applied layers of fiber tow 114. In some implementations an automated fiber placement machine, as the AMM, may be configured to place a plurality of fiber tows simultaneously or intermittently on the substructure.

In another embodiment, the additive material is applied using a Material Extrusion (ME) process, such as Fused Filament Fabrication (FFF) or Fused Granular Fabrication (FGF), that is augmented for Continuous Fiber Reinforcement (CFR). In this implementation, the AMM end effector 112 is configured to extrude a thermoplastic matrix material while simultaneously feeding and embedding a continuous dry fiber (e.g., carbon, glass, or aramid) into the molten extrudate. In this context, the newly applied additive material, represented conceptually by the fiber tow 114 in the figures, is instead a fiber-reinforced composite material formed in-situ during the deposition process, rather than a pre-impregnated tow. This method likewise achieves the goal of applying a structurally reinforcing layer to join the primary substructure pieces and/or build additional features thereon to form a consolidated part 200.

The alignment/stiffening structure(s) 204 may in some implementations be removed to reduce weight of the final structure, as the encasement in one or more layers of fiber tow may sufficiently stiffen the final structure. In some instances, the alignment/stiffening structure(s) 204 may constitute all or part of an alignment structure held by or affixed in the structural integration area 100 (also referenced as an AMM work area or second area/location). For example, the alignment/stiffening structure(s) 204 may be affixed to or held by the platform 130 or to/by a support structure (not shown) attached to the platform 130. In some implementations, the primary substructures 122a, 122b, 122c may instead be aligned relative to one another, relative to a common reference or alignment structure, and/or aligned according to a predetermined orientation or position (not shown). Removal of the alignment/stiffening structure(s) 204 may include mechanical removal, such as physically extracting the alignment/stiffening structure(s) 204, e.g., by pulling, drilling, pushing; or by dissolving in a liquid solvent, or melting, and the like, as will be appreciated by those having skill in the art.

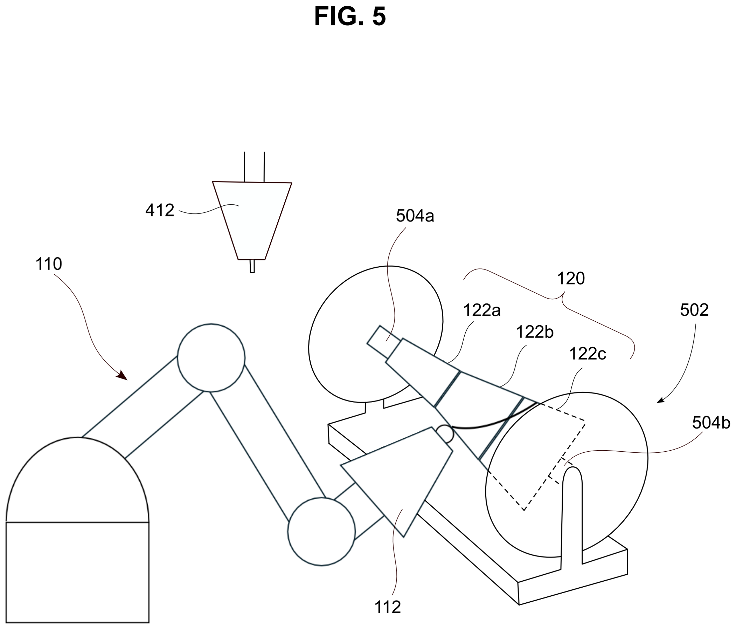

In some embodiments, the alignment/stiffening structure(s) 204 may be formed to include a feature to facilitate secure connection to the platform 130. For example, the alignment/stiffening structure(s) 204 may further include a bolt/screw plate (not shown) or may be keyed to a complementary feature of the platform 130. In some embodiments (see FIG. 5) the alignment/stiffening structure(s) 204 may be formed to extend from one or more ends of the workpiece 120 to engage a chuck, spindle, quill, or tailstock of a rotator tool 502, which may be oriented horizontally (as shown), vertically, or at any other angle. In some embodiments, the alignment/stiffening structure(s) will be later trimmed or modified to remove any excess length, interface features, or connection features.

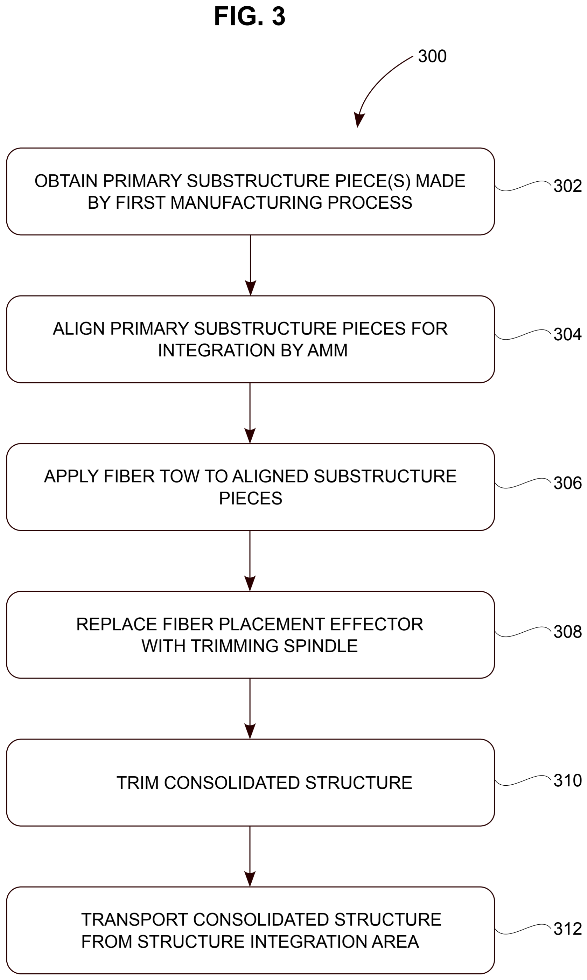

FIG. 3 is a flow chart illustrating a method 300 for additive manufacturing of a part, according to an embodiment with a plurality of substructure pieces. In a first operation 302, one or more primary substructure pieces of the plurality of primary substructure pieces (e.g., 122a, 122b, 122c, etc.) may be obtained from a first manufacturing area and brought to a structural integration area (e.g., 100) for assembly and integration. In some embodiments, the one or more primary substructure pieces may be formed by a first manufacturing process (e.g., an additive manufacturing process) in which it is impossible or impractical to form a large completed primary substructure. For example, in actual implementations, powder bed fusion (PBF) specifically selective laser sintering (SLS) is used to produce the plurality of substructure pieces. When large parts are to be produced in accord with the embodiments disclosed herein, the intended substructure is engineered to constitute a number of complementary pieces each sized to fit within the build volume of a standard SLS machine. The smaller parts can each be produced, therefore, by a standard (i.e., non-large scale) SLS machine. In contrast, SLS at large scale has substantially higher risks and higher costs than at smaller scale due to factors like thermal management challenges, powder handling complexities, residual stress accumulation, error costs, and significantly higher equipment costs. According to the method, the one or more primary substructure pieces (e.g., 122a, 122b, 122c) are typically constructed from a process other than automated fiber placement (AFP). The inventors recognize that primary substructure pieces could be constructed via any of several methods, including AFP and other additive manufacturing processes selected from categories such as powder bed fusion (PBF) (including selective laser sintering (SLS), laser powder bed fusion (LPBF), selective laser melting (SLM), and electron beam melting (EBM) and/or others), material extrusion (ME) (including at least fused filament fabrication (FFF), fused granulate fabrication (FGF), and direct pellet extrusion (DPE), directed energy deposition (DED) (including laser metal deposition (LMD), wire arc additive manufacturing (WAAM), and electron beam additive manufacturing (EBAM)), vat photopolymerization (such as stereolithography (SLA) and/or digital light processing (DLP), as well as continuous liquid interface production (CLIP) and masked stereolithography (MSLA)), binder jetting, sheet lamination (including laminated object manufacturing (LOM)), and material jetting (including PolyJet (TM) and MultiJet Printing (TM) processes), and composite-based additive manufacturing (CBAM), as well as via subtractive manufacturing methods, casting, molding, forging, thermoforming, or manufactured using a plurality of such methods.

In some embodiments, obtaining the primary substructure pieces may include transporting the primary substructure pieces from another area (first area) of a same manufacturing facility. This may include an automated process that includes one or more of an automated conveyor belt, automated monorail system, automated crane, automated forklift, automated guided vehicle (AGV), an autonomous mobile robot (AMR), a hoist, and/or a robotic arm. In some embodiments, each piece of the plurality of pieces of the primary substructure may be obtained from a respective source area. In a very large-scale operation, the first area(s) could include another factory or manufacturing facility remote from the location of the integration process (e.g., structural integration area 100). In such instances, transport of the primary substructure piece(s) (e.g., 122a, 122b, 122c) may also include use of, e.g., truck, ship, train, and/or airplane.

In operation 304, each primary substructure piece may be fixtured together with and/or located to (also reference herein as "aligned with") another substructure piece to form a combined part (e.g., workpiece 120). In disclosed embodiments, the workpiece 120 may be larger than the first manufacturing process (e.g., SLS) could have printed in a single piece due to typical build volume limitations of standard SLS machines. To facilitate the fixturing, locating, and/or aligning of the one or more primary substructure pieces, one or more of the primary substructure pieces (e.g., 122a, 122b, 122c) and/or the one or more alignment structures (e.g. 204) may be constructed to include integral locating or fixturing features. Such features may include, but are not limited to, mounting holes, keyed slots, reference datums, and/or threaded inserts designed to interface directly with a build platform, a fixture, or a rotator. These integral features may be temporary manufacturing aids that are subsequently removed from the consolidated part, for instance, by trimming the feature from a permanent substructure piece, or by removing the entire piece when it serves as sacrificial tooling. In some embodiments one or more alignment structures (e.g., 204), which may themselves possess such fixturing features, are used to facilitate locating the pieces with respect to each other, to a common reference, or to a predetermined orientation or position. For example, the pieces may be located to and/or aligned with one another by use of one or more carbon fiber rods or tubes 204. In some embodiments, the alignment structure(s) 204 may also function as, and become a part of a consolidated part 200, e.g., as a stiffening structure. In other implementations, the method may include removal or trimming of the alignment structures. Such removal may include dissolving the alignment structure.

In some embodiments, the primary substructure pieces as part of operation 302, operation 304, or as a separate operation prior to operation 306 may undergo one or more additional manufacturing steps to further enable the application (e.g. the adhesion) of additive material as part of operation 306 between the primary substructure material and the subsequently applied additive material. This treatment may include, but is not limited to, mechanical, chemical, thermal, optical, or plasma-based surface treatments such as, but not limited to, abrasive blasting, abrasion, peel-ply removal, chemical etching, flame treatment, plasma activation, laser ablation, corona discharge, UV-ozone exposure, solvent cleaning, drying/bake-out, or the application of primers, adhesives, film adhesives, and adhesion promoters. Optionally, as a further preparatory step performed prior to automated deposition by the AMM in operation 306, base layers of additive material may be manually applied to improve adhesion of the subsequently applied additive material.

In operation 306, the AMM deposits additive material (e.g., fiber tow 114) onto the workpiece 120 comprised of the primary substructure piece(s) (e.g., e.g., 122a, 122b, 122c previously constructed via, e.g., SLS). In some embodiments the additive material is dispensed from an automated fiber placement (AFP) end effector attached to the AMM (e.g., 112) that applies single tows of tow (e.g., 114), such as carbon fiber reinforced plastic (CFRP) one at a time, adhering or welding each fiber tow onto the plurality of primary substructure pieces (e.g., SLS parts). To facilitate adhesion or welding between the newly applied additive material and the existing substrate (which may be the primary substructure or previously applied layers), one or more heating methods may be employed, often in conjunction with mechanical pressure applied to the newly disposed fiber tow. Localized heating may be applied by or near the end effector 112 using energy sources such as lasers, infrared (IR) bulbs, hot gas convection, or other suitable heating elements configured to direct heat toward the deposition point. Specifically, in Automated Fiber Placement (AFP), this localized heating may include use of one or more laser devices, focused precisely at the one or more nip points (where each incoming tow is compacted into the substrate). Immediately following the heating and deposition, a compaction member, which is often integrated with or positioned adjacent to the deposition end effector, is typically utilized to apply pressure. This compaction member, commonly taking the form of a roller in processes like AFP or ATL but potentially utilizing other mechanisms such as a rigid or compliant compaction ring, shoe, or skid for other additive manufacturing processes such as Material Extrusion (ME) (e.g. FGF or FFF), presses the heated, pliable newly applied additive material firmly against the substrate. This compaction action is crucial as it ensures intimate contact between layers, aids in consolidating the material, helps remove potential voids or trapped air, and significantly enhances the adhesion and weld strength, thereby improving the quality and structural integrity of the consolidated part. Furthermore, adhesion and consolidation may also be enhanced by controlling the thermal environment, potentially including heating the overall AMM work cell and/or heating the build platform (e.g., platform 130). After several layers of the fiber tows 114 are applied onto the plurality of primary substructure pieces, the pieces are fully integrated, forming a consolidated part (e.g., 200). In some embodiments, the AMM may be configured to place plural fiber tows simultaneously or intermittently. The AMM may include integrated automated fiber placement (AFP) head or may be configured for interchangeable end effectors including an end effector with AFP functionality. Such AFP head may include a controller configured to individually control the placement for each of the plural fiber tows, including control of any heating (e.g., by the individually controlled laser heating devices described above) and compaction pressure of each fiber tow. The inventors acknowledge that additive manufacturing processes other than AFP can be implemented in this step. The inventors further acknowledge that tows comprised of materials other than CFRP may be applied using AFP including, but not limited to, Ceramic Matrix Composites (CMC) and natural fiber composites and further acknowledge that other materials may be applied using alternative additive manufacturing methods such as Material Extrusion (ME) (like Fused Filament Fabrication (FFF) or Fused Granular Fabrication (FGF), often with fiber reinforcement), or processes suitable for Metal Matrix Composites (MMC). In some embodiments, prior to the AMM process or intermittently during the AMM process (typically for AFP), temporary support material structures (not shown) may be applied or placed within primary substructure cavities. When applied additively, these temporary support material structures are applied using Material Extrusion (ME) processes such as fused filament fabrication (FFF) or fused granular fabrication (FGF). The purpose of the temporary support material structures is to provide a stable surface for the AFP lamination to span the primary substructure cavities, thereby preventing dimples or irregularities on the outer surface. As discussed above, these temporary support material structures may then be dissolved out of the part or removed by pulling, drilling, pushing, dissolving, melting, and the like, as will be appreciated by those having skill in the art after the AFP process is completed.

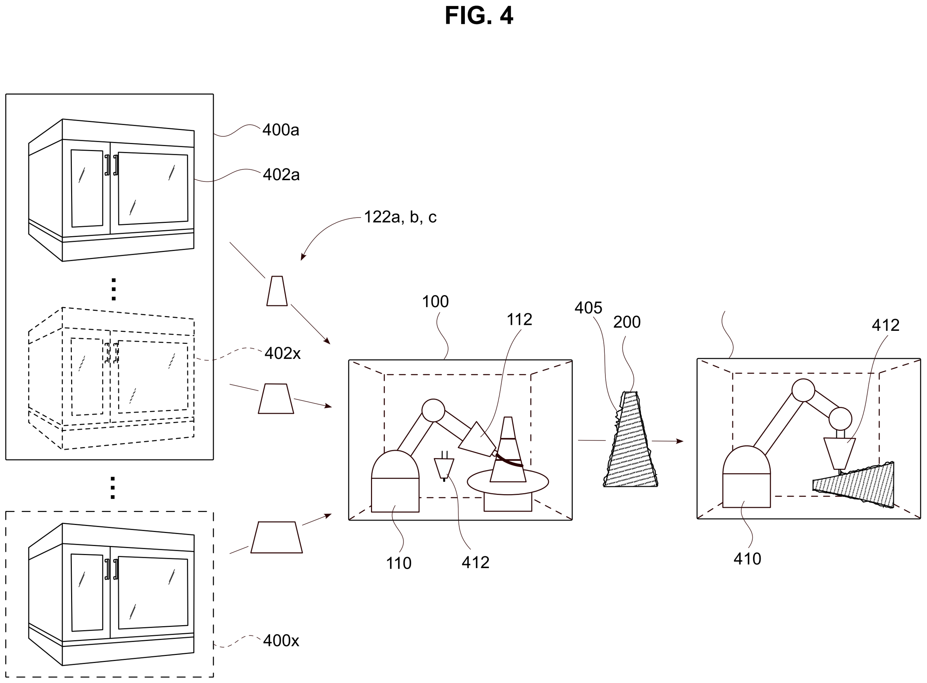

In operation 308, according to an embodiment, after the deposition of the additive material (in this embodiment fiber tow(s)) is completed, the AMM may replace the automated fiber placement effector with a trimming spindle effector (e.g., 412 in Fig. 4). The AMM may, in operation 310, use the trimming spindle to perform the final trimming (i.e., subtractive manufacturing) on the completed/consolidated part. For example, in some implementations, the deposition process may result in undesirable excess material on the workpiece. This undesirable excess material from placement of additive material may be automatically trimmed by the AMM. In operation 312, once the trimming is complete, the completed structure (e.g., 200) part is removed from the structural integration area (e.g., 100), now consisting of multiple additively manufactured components integrated into a single, cohesive/consolidated structure. In other implementations, the consolidated part (e.g., 200) may be transported, after the placement of additive material (e.g., fiber tow), to a third location for trimming or other removal of excess material. For example, in some embodiments of the method, the consolidated part 200 may be transported to a separate area for removal of at least some of the interior structure, such as a portion of the primary substructure, alignment structure(s) or the temporary support material structures (e.g., 204). Such removal of a portion of the primary substructure may occur, for instance, when that portion served primarily as sacrificial tooling (a temporary internal scaffold) during the application of the exterior additive material, or to reduce final part weight once the exterior additive material provides sufficient structural integrity, or to provide access to internal cavities. When a primary substructure piece is intended for removal, it may be made from a material that is removable by, for example, dissolution in an aqueous or solvent-based solution, thermal softening and melting, or mechanical breakup and removal. For example, the sacrificial tooling could be made of a water-soluble thermoplastic (such as a polyvinyl alcohol-based material) that can be washed out with water, or it could be made of a material soluble in a common industrial solvent, such as acetone.

In some embodiments, heat and/or pressure may be applied to the part to further consolidate the assembly either once or intermittently throughout the AMM process 306, either before the trimming process 310, or after the trimmed consolidated part is transferred as part of operation 312. This can be achieved by transferring the part into an autoclave or using other suitable heat and/or pressure application methods. In addition, according to an embodiment, the workpiece 120 may be inspected one or more times throughout the AMM process 306, before the trimming process 310, and/or after the trimmed consolidated part is transferred as part of operation 312. Such inspection can measure dimensional accuracy, assess production quality, or evaluate internal characteristics such as porosity or voids. Inspection may, in various implementations include manual and/or automated inspection.

FIG. 4 is a partial block diagram illustrating elements corresponding to the manufacturing method 300. One or more first areas 400a to 400x may each include one or more manufacturing machines 402a to 402x. For example, a desired primary substructure may include three primary substructure pieces 122a, 122b, 122c (see Fig. 1) each constructed on a separate manufacturing machine 402a-402x. The scale of the manufacturing machines 402a-402x may permit a primary substructure to be assembled from plural primary substructure pieces constructed in parallel quickly and economically. This can be useful for mass production and/or quick prototyping, and for some technologies may be the only option, or only practical option for constructing a large primary substructure. The primary substructure pieces are transported to an AMM work cell (or "second area") 100 where they are arranged for processing by the AMM machine 110. The arrangement, as discussed above, may include aligning the primary substructure pieces 122a, 122b, 122c to each other and/or to an alignment structure or fixture (not shown in FIG. 4) to form a primary substructure or work piece 120.

The AMM machine 110 may include an additive manufacturing head such as an automated fiber placement (AFP) head 112 or other additive manufacturing end effector(s). As noted above, the (e.g.) AFP head 112 may be integrated with the AMM 110 or may be interchangeable with other end effectors, such as a trimming spindle 412. The AFP head or other end effector 112 may be configured to dispose one or more layers of additive material (e.g., fiber tow 114) on the workpiece 120. In some embodiments the fiber tow 114 is placed one tow at a time. In other embodiments, the AFP head or end effector 112 may be configured to place multiple fiber tows 114 simultaneously, the placement of each fiber tow 114 independently controlled by a controller (not shown) of the AFP head 112. In other embodiments, the additive manufacturing end effector is a Material Extrusion (ME) end effector such as FGF or FFF, potentially incorporating reinforcement material (where in-situ carbon fiber, aramid fiber, fiberglass, basalt fiber, or ceramic fibers is joined with the newly applied additive material either in the nozzle or applied before or after the newly applied additive material). In a further embodiment, the end effector 112 may include a Directed Energy Deposition (DED) end effector.

When the AMM is finished placing the one or more layers of additive material 114 (e.g., fiber tow 114), the resulting consolidated part 200 may include excess additive material 405, such as overhanging ends of fiber tows 114. In one embodiment of the method, the AMM 110 may exchange the AFP head 112 for a trimmer head 412 and the AMM 110 may then trim the excess additive material 405 from the consolidated part 200. In another embodiment of the method, the consolidated part 200 may be transported to a separate area configured for trimming by a trimming machine 410. The trimming machine 410 may include an integrated or exchangeable trim head 412.

FIG. 5 is a block diagram illustrating structures used in a manufacturing method that uses a horizontal rotator, according to an embodiment. In some instances, the workpiece 120 may be fixtured or aligned in a horizontal position, held at each end by a horizontal rotator 502. The one or more alignment/stiffening structure(s) 204 (in FIG. 2) may be crafted to extend from ends of the workpiece 120, for example having a first extended end 504a and a second extended end 504b, each of which may attach to the rotation tool 502 as described supra. In some embodiments, the alignment/stiffening structure will be formed to include features to facilitate secure connection to the horizontal rotator or vertical rotator (not shown). For example, the alignment/stiffening structure(s) 204 (in FIG. 2) may include a bolt/screw plate or may be keyed to a complementary feature of the horizontal rotator 502. The horizontal rotator 502 may thus rotate the workpiece 120 about a longitudinal axis in a substantially horizontal orientation. Those having skill in the art will recognize that the rotator 502 could be oriented at angles other than horizontal in some implementations. The AMM 110 may exchange the additive manufacturing end effector 112 for a different additive manufacturing end effector, or for a trimming end effector 412 for trimming of the workpiece after the additive material (e.g., fiber tow 114) has been applied. Additional end effectors (not shown) may be used to process the workpiece 120 to apply heat (e.g., for preparing the substrate/substructure for application of fiber tows, curing applied fiber tow layers, etc.), apply coatings or other surface preparations and the like.

The extended ends 504a and/or 504b may be removed when their utility ends. For example, the extended ends 504a and/or 504b of the one or more alignment/stiffening structure(s) 204 may be removed by the trimming tool 412, as part of a total removal of the one or more alignment/stiffening structure(s) 204 as described herein, or by other removal methods known to those having skill in the art.

In some embodiments the completed structure is an aerostructure. For example, the aerostructure in this instance may be a wing structure with integrated stiffening or a flight control surface with integrated stiffening. The primary substructure pieces may be manufactured by powder bed fusion (PBF), e.g., SLS, offer advantages for creating complex internal geometries (e.g., optimized lattices, internal channels) that might be difficult or less economical to produce solely by the consolidating AMM process (e.g., AFP). This hybrid approach allows for optimized designs and manufacturing efficiency, achieving results potentially superior to those readily obtainable using only a single process. Furthermore, this manufacturing method offers enhanced structural continuity and potentially reduced stress concentrations compared to traditional assembly involving fastening or bonding separately manufactured components, owing to the direct, in situ application of the second material onto the first. It also allows for strategic selection of the most suitable manufacturing process and material for different regions of the part, thereby tailoring properties by leveraging, for example, the geometric freedom of one process, like powder bed fusion (PBF), for internal features and the specific strength, stiffness, or deposition efficiency of another process, like automated fiber placement (AFP), for the external structure. Consequently, this approach can enable the creation of large, complex, integrated structures that might otherwise be challenging or infeasible to produce using only a single additive manufacturing technology due to limitations in build volume, material capabilities, or geometric constraints. This consolidation of function and structure within a single manufacturing sequence can also lead to a potential reduction in overall part count, subsequent assembly time, and associated manufacturing costs.

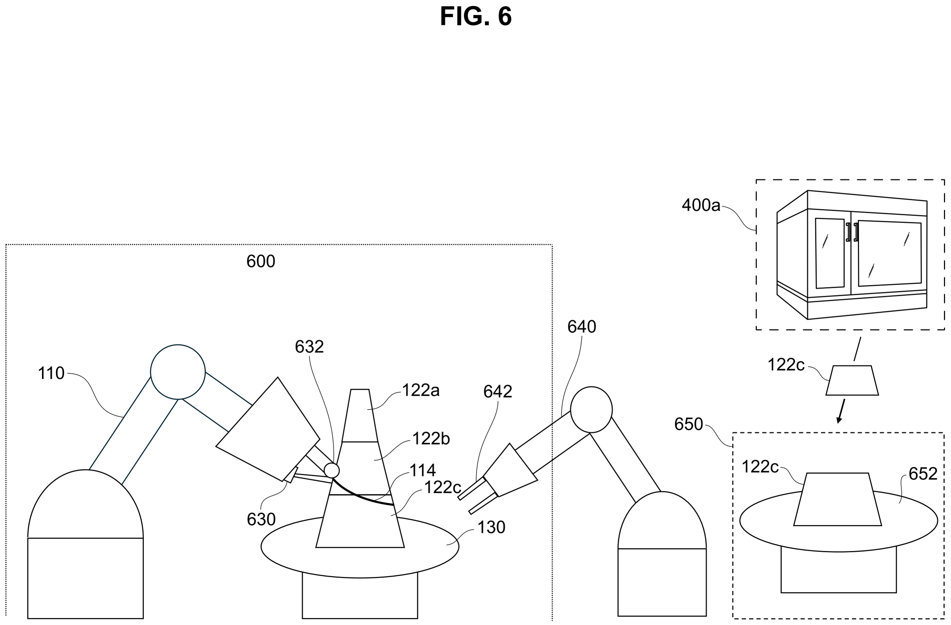

FIG. 6 is a schematic diagram illustrating part of an exemplary workflow of the manufacturing method discussed above, according to an embodiment. The process begins in a first area 400a (e.g., a Selective Laser Sintering (SLS) additive manufacturing cell). Within the first area 400a, a primary substructure piece 122c is constructed from a thermoplastic material. As disclosed above, a variety of manufacturing methods and materials may be utilized in any or all of one or more first areas 400a-400z. Following its creation, primary substructure piece 122c is conveyed to an intermediate area 650 for additional processing. This conveyance may be manual or may be accomplished using any of the automated conveyance methods described previously, or a combination of manual and automated methods.

The intermediate area 650 is a station for performing one or more manufacturing operations prior to the final integration in the AMM work cell or second area 600. As shown, the primary substructure piece 122c may in some embodiments be placed on a table 652 where a surface treatment, e.g., an abrasive treatment such as a manual or automated sanding process, may be performed on outer surfaces of the substructure piece (e.g., 122c). At this intermediate area 650, which corresponds to an intermediate processing operation, serves to treat the surface of the substructure piece (122c) to, e.g., increase surface roughness and prepare the part for enhanced adhesion of the additive material to be applied later. While a manual sanding process is disclosed above, it will be appreciated by those skilled in the art that surface treatments may be performed by an automated system, and that various other intermediate manufacturing processes may be carried out in the intermediate area 650. For clarity, only one production and processing path is illustrated. However, consistent with this disclosure, one or more parallel production and processing paths for constructing and procession additional or alternative primary substructure components, such as 122a and 122b, are contemplated by this method.

From the intermediate area 650, a part conveyance system, shown in FIG. 6 as a robot 640, retrieves the treated substructure piece 122c from the intermediate area 650. The robot 640 may be equipped with a part gripper and fastening end effector 642. The robot 640 is configured to transport the piece into the second area 600, which constitutes the AMM work cell. In this work cell 600, the robot 640 precisely places and aligns each substructure piece 122c relative to other primary substructure pieces (such as 122a and 122b, positioned on build surface 130) that have been similarly prepared. The robot 640 may use integral features designed into the substructure pieces (e.g., 122a, 122b, 122c) to achieve precise alignment. The pieces are then joined together on the build surface 130 to form the complete primary substructure (e.g., 120 in FIG. 1). In the embodiment shown in FIG. 6, this joining is achieved by the robot 640 using a fastening end effector 642. In alternative embodiments, the joining operation may include other strategies, such as applying a bonding agent between the pieces, or inserting one or more alignment structures (not seen in FIG. 6) such as spars or rods 204 shown in FIG. 2) to physically link and secure the pieces prior to the consolidation step.

Within the second area 600, the AMM 110, such as an Automated Fiber Placement (AFP) system including an AFP head and a serial link robot motion system, performs the consolidation operation. The AFP head applies one or more tows 114 to conform to the outer surface of the now-assembled primary substructure. To facilitate strong bonding, the AFP head may, in some embodiments, include a heater system 630, such as one or more laser emitters, which directs heat toward the nip point(s) where the tow(s) meets the substrate. Immediately following the deposition of the heated tow(s), a compaction member 632, shown here as a compaction roller, applies pressure to the applied tow(s). The combination of localized heat from the heater system 630 and force from the compaction member 632 facilitates robust interlaminar bonding between the newly applied tow 114 and the substructure, or between successive layers of tows, thereby creating a fully consolidated part. As noted previously, other additive manufacturing technologies such as FFF or FGF that may also incorporate heater and compaction systems can be used in place of the AFP system.

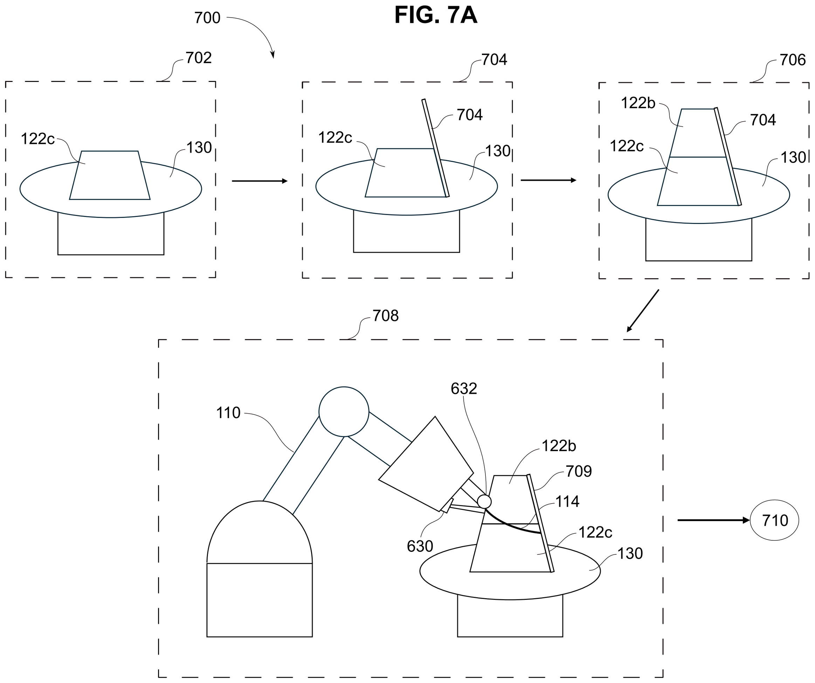

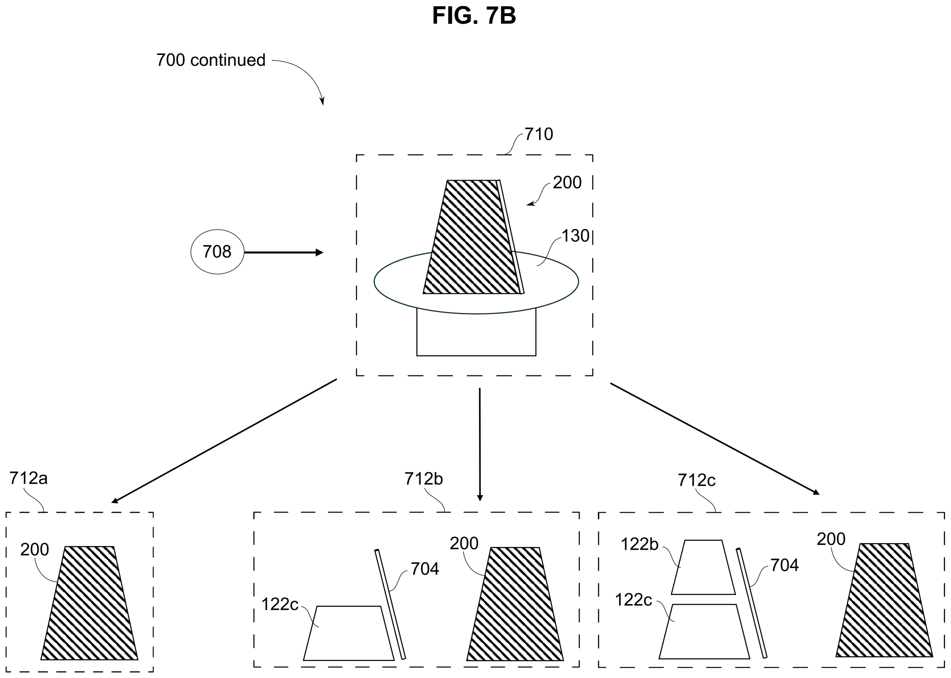

FIGS. 7A, 7B illustrate a process flow diagram illustrating an exemplary manufacturing sequence 700 performed within the second area (e.g., AMM work cell 100) and showcasing potential configurations of the resulting consolidated part, according to an embodiment. This sequence demonstrates the assembly of a primary substructure from multiple pieces, its consolidation using an additive manufacturing process, and subsequent variations of the final part. It is to be understood that the first areas, any intermediate processing steps prior to assembly in the second area, and the conveyance systems are for clarity omitted from FIGS. 7A, 7B.

The process 700 begins at operation 702, where a first primary substructure piece (e.g., 122c) is positioned and fastened to the build surface 130 within the second area 600. In this embodiment, primary substructure piece 122c was manufactured with features to enable it to be easily fastened to the build surface. At operation 704, an alignment structure 204 may, for some builds, be attached to the build surface 130 and interfaced with the primary substructure piece 122c by, for example, being inserted into a pre-formed slot/channel (not shown). In this embodiment, the alignment structure 709 (analogous to the alignment structures 204 in FIG. 2) may be manufactured with features to enable it to be easily fastened to the build surface. The alignment structure(s) 709 serve to accurately locate and orient subsequent substructure pieces.

At operation 706, a second primary substructure piece 122b is brought into position and aligned with the first primary substructure piece 122c. This alignment is facilitated by the alignment structure 709, which may in some embodiments fit within a corresponding channel or feature of the primary substructure piece 122b. While the figure depicts the assembly of the primary substructure pieces 122b, 122c and alignment structure 204 within the second area 600, it is also contemplated that, in an alternative embodiment, these components can be partially or completely pre-assembled prior to being conveyed to the second area. Further, the size, relative placement, and number of primary substructure pieces shown here are purely illustrative, and may in practice include a different size, placement, and/or number of primary substructure pieces.

At operation 708, once the primary substructure pieces 122b and 122c are assembled and aligned, an AMM 110 applies additive manufacturing material 114 to the exterior of the assembled primary substructure (e.g., 120). In the embodiment shown, the AMM 110 is an Automated Fiber Placement (AFP) system that deposits one or more tows 114. To enhance the quality of the consolidated part 200, the AFP system 110 may optionally include a heating system 630 (e.g., one or more laser or infrared heaters) and one or more compaction members 632 (e.g., a compaction roller). The heating system 630 applies thermal energy to the deposition point to facilitate adhesion and welding, while the compaction member 632 applies pressure to ensure intimate contact, remove voids, and improve consolidation between the newly applied tow(s) 114 and the underlying surface.

At operation 710, the deposition process by the AMM 110 is complete, resulting in a consolidated part 200. In this embodiment, the AFP system has applied multiple plies of AFP tow(s) 114 to form a structurally reinforced outer shell that conforms to the exterior surfaces of the primary substructure pieces 122b, 122c, and the alignment structure 709. The plies are applied in a predetermined layup schedule to achieve the desired anisotropic or quasi-isotropic mechanical properties for the aerostructure. For example, a common quasi-isotropic layup, such as [0° /90°/+45°/-45°], may be utilized. However, those skilled in the art will understand that any number of layup sequences and ply orientations can be employed based on the specific structural requirements of the part. Those skilled in the art will also appreciate that additional manufacturing steps can be performed on the consolidated part 200, either within the second area 600 or in a subsequent processing area (not shown). These operations may include, but are not limited to, trimming, sanding, drilling, or curing in an autoclave.

Following the creation of the consolidated part 200, the process can yield various final part configurations, as illustrated by the three illustrated (non-limiting) embodiments 712a, 712b, and 712c. It is anticipated that numerous other combinations of permanent and removable substructure pieces and alignment structures are possible. Furthermore, the consolidated part 200 may be further modified through one or more additional processes, including but not limited to, assembly with other components, curing, surface treatment(s), further additive manufacturing, or subtractive manufacturing.

In a first embodiment 712a, the consolidated part 200 results when the primary substructure pieces 122b and 122c, along with the alignment structure 204, are retained as permanent, integrated components of the consolidated part 200. In this configuration, these internal substructure pieces 122b, 122c and alignment structure 204 provide strength, stiffness, and internal support to the reinforced outer shell formed by the additive material 114. For such an application, particularly in aerospace, these permanently retained internal components are typically manufactured from high-performance materials comprising a reinforcement material integrated within a matrix material. Non-limiting examples of reinforcement materials include carbon fiber, glass fiber, and aramid fiber. The matrix material is often a high-performance thermoplastic such as but not limited to Polyether Ether-Ether Ketone (PEEK), Poly-Ether-Ketone-Ketone (PEKK), PolyAryle-Ether-Ketone (PAEK), and/or a thermoset polymer (e.g., epoxy resin).

In a second embodiment 712b, the consolidated part 200 results from retaining a portion or subset of the internal components. For example, after a primary substructure piece 122c and an alignment structure 204 have been removed, a primary substructure piece 122b (not visible) remains inside of the consolidated part 200 as a permanent internal structure. In this case, the removed components, e.g., primary substructure piece(s) 122c and alignment structure 204, function as sacrificial tooling, providing shape and support only during the AMM process. While these components are illustrated in embodiment 712b in their original form post-removal by mechanical extraction, it is anticipated that they may be reused, repurposed, or disposed of. Furthermore, these temporary components can be made from materials designed or selected for easy removal. For example, substructure components that are intended to be removed could be made from a water-soluble material, allowing for their removal by dissolution when the consolidated part 200 is placed in an aqueous bath. It is also anticipated that removal can be achieved by other methods including but not limited to, dissolution in a solvent-based solution, thermal softening, melting, or mechanical breakup.

In a third embodiment 710c the final "consolidated" part 200 is a hollow shell as, in this configuration, all internal components including the primary substructure pieces 122b and 122c, and the alignment structure 204 are removed. Here, all internal components are sacrificial tooling used to define the internal geometry of the final part during manufacture. As described in connection with the second embodiment 710b, the primary substructure 122b, 122c, and alignment structure 204 are sacrificial tooling and can be removed via various methods. For instance, the primary substructure 122b, 122c and/or alignment structure 204 components may be made from one or more materials that are soluble in an aqueous or solvent-based solution, or they may be removed by thermal methods (melting) or mechanical methods (breakup and physical extraction), consistent with the methods described herein and recited in the claims.

According to an embodiment, a manufacturing method using an automated fiber placement (AFP) system includes an operation of constructing, in one or more first areas each using one or more respective first manufacturing processes, one or more primary substructure pieces that form a primary substructure; conveying the one or more primary substructure pieces from the one or more first areas to a second area constituting an AFP work cell; and applying, using the AFP system in the second area, one or more tows conforming to at least a portion of an outer surface of the primary substructure to obtain a consolidated part.

According to an embodiment, a manufacturing system may include one or more first manufacturing areas each configured to construct, using one or more first manufacturing processes, one or more primary substructure pieces of a primary substructure. The system may include a conveyance system configured to convey each primary substructure piece to a second manufacturing area. The manufacturing system may include an AFP system disposed in the second manufacturing area and configured to apply one or more tows to the primary substructure to obtain a consolidated part, the primary substructure having been assembled from the one or more primary substructure pieces.

Each of the following features may be applied, alone or in combination with other disclosed features, to the manufacturing method and systems disclosed above.

The first manufacturing process may include at least one of: powder bed fusion (PBF), material extrusion (ME), composite-based additive manufacturing (CBAM), vat photopolymerization, directed energy deposition (DED), binder jetting, sheet lamination, material jetting, casting, molding, forging, stamping, machining, trimming, drilling, waterjet cutting, laser cutting, or thermoforming.

The manufacturing method may include processing the one or more primary substructure pieces, in at least one intermediate processing operation, after said constructing the one or more primary substructure pieces and before said applying the one or more tows.

The applying of the one or more tows may include applying at least one of heat or compaction to the tows being applied to facilitate adhesion between the tows being applied and at least one of the primary substructure or previously applied tows.

The primary substructure may be formed from a plurality of the primary substructure pieces, the method further comprising aligning the plurality of primary substructure pieces to facilitate said applying of the tows to the primary substructure via the AFP system.

According to an embodiment, the aligning of the plurality of the primary substructure pieces may include at least temporarily affixing, fastening, or bonding at least one of the primary substructure pieces of the plurality of primary substructure pieces to a build surface, to one or more alignment structures, or to one or more other primary substructure pieces of the plurality of primary substructure pieces.

The at least one primary substructure piece may be affixed, fastened or bonded to one or more alignment structures and at least one of the one or more alignment structures may be disposed in an interior cavity of the primary substructure or in a slot formed in the primary substructure. The at least one alignment structure may include an elongated member that is a spar, rod, pipe, tube, beam, profile, mandrel, spline, or another elongated structural element.

At least one of the one or more alignment structures may be retained within the consolidated part as a permanent component.

The at least one of the one or more alignment structures may extend beyond at least one edge of the aligned primary substructure pieces and may have one or more interface features that facilitate coupling the aligned primary substructure to a rotator or build surface via an end of the at least one alignment structure. At least one of: the one or more tows, the one or more primary substructure pieces, or the one or more alignment structures may include a reinforcement material integrated within a matrix material.

At least one of the one or more primary substructure pieces may be configured to be removed from the consolidated part after the one or more tows is/are applied.

The at least one primary substructure piece that is configured to be removed may be removable by at least one of: dissolution in an aqueous or solvent-based solution, thermal softening, melting, mechanical removal, or mechanical breakup.

At least one of the one or more primary substructure pieces or at least one of the one or more alignment structures may include one or more interface features configured to facilitate coupling to the rotator or the build surface. Descriptions of specific implementations are described supra, e.g., as integral locating or fixturing features.

According to an embodiment, a consolidated part, e.g., resulting from the method and system described above, includes a primary substructure formed from a plurality of primary substructure pieces; and an additive manufacturing material disposed directly onto and conforming to at least a portion of an outer surface of the primary substructure, thereby integrating at least two primary substructure pieces of the plurality of primary substructure pieces into the consolidated part.

At least one primary substructure piece of the plurality of primary substructure pieces in the consolidated part may be manufactured by a manufacturing process that includes at least one of: powder bed fusion (PBF), material extrusion (ME), composite-based additive manufacturing (CBAM), vat photopolymerization, directed energy deposition (DED), binder jetting, sheet lamination, material jetting, casting, molding, forging, stamping, subtractive machining, trimming, drilling, waterjet cutting, laser cutting, or thermoforming.

The consolidated part may also include one or more alignment structures disposed in an interior cavity of the primary substructure or in a slot formed in the primary substructure, at least one of the one or more alignment structures being a spar, rod, pipe, tube, mandrel, spline, or another elongated structural element.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims

## Claims

1. A method of manufacturing using an automated fiber placement (AFP) system, the method comprising:
- constructing, in one or more first areas each using one or more respective first manufacturing processes, one or more primary substructure pieces that form a primary substructure;
- conveying the one or more primary substructure pieces from the one or more first areas to a second area constituting an AFP work cell; and
- applying, using the AFP system in the second area, one or more tows conforming to at least a portion of an outer surface of the primary substructure to obtain a consolidated part.

2. The method of manufacturing of claim 1,
wherein the first manufacturing process includes at least one of:
- powder bed fusion (PBF), material extrusion (ME), composite-based additive manufacturing (CBAM), vat photopolymerization, directed energy deposition (DED), binder jetting, sheet lamination, material jetting, casting, molding, forging, stamping, subtractive machining, trimming, drilling, waterjet cutting, laser cutting, or thermoforming.

3. The method of manufacturing according to claim 1 or claim 2,
wherein the primary substructure is formed from a plurality of the primary substructure pieces, the method further comprising aligning the plurality of primary substructure pieces to facilitate said applying of the tows to the primary substructure via the AFP system, wherein said aligning the plurality of the primary substructure pieces includes at least temporarily affixing, fastening, or bonding at least one of the primary substructure pieces of the plurality of primary substructure pieces to a build surface, to a rotator, to one or more alignment structures, or to one or more other primary substructure pieces of the plurality of primary substructure pieces.

4. The method of manufacturing of claim 3,
wherein the at least one primary substructure piece is affixed, fastened, or bonded to one or more alignment structures, and at least one of the one or more alignment structures is disposed in an interior cavity of the primary substructure or in a slot formed in the primary substructure, and the at least one alignment structure comprises an elongated member that is a spar, rod, pipe, tube, beam, profile, mandrel, spline, or another elongated structural element.

5. The method of manufacturing according to claim 4,
wherein at least one of the one or more alignment structures is retained within the consolidated part as a permanent component.

6. The method of manufacturing according to any one of claims 1 to 5, wherein at least one of the one or more primary substructure pieces is configured to be removed from the consolidated part after said applying the one or more tows by at least one of: dissolution in an aqueous or solvent-based solution, thermal softening, melting, mechanical removal, or mechanical breakup.

7. A manufacturing system, comprising:
- one or more first manufacturing areas each configured to construct, using one or more first manufacturing processes, one or more primary substructure pieces of a primary substructure;
- an automated fiber placement (AFP) system disposed in a second manufacturing area and configured to apply one or more tows to the primary substructure to obtain a consolidated part, the primary substructure having been assembled from the one or more primary substructure pieces.

8. The manufacturing system according to claim 7,
wherein the first manufacturing process includes at least one of:
- powder bed fusion (PBF), material extrusion (ME), composite-based additive manufacturing (CBAM), vat photopolymerization, directed energy deposition (DED), binder jetting, sheet lamination, material jetting, casting, molding, forging, stamping, subtractive machining, trimming, drilling, waterjet cutting, laser cutting, or thermoforming.

9. The manufacturing system according to claim 7,
wherein the primary substructure is formed from a plurality of the primary substructure pieces, the system further comprising aligning the plurality of primary substructure pieces to facilitate said applying of the tows to the primary substructure via the AFP system, wherein at least one piece of the plurality of the primary substructure pieces is at least temporarily affixed, fastened, or bonded to a build surface, to a rotator, to one or more alignment structures, or to one or more other primary substructure pieces of the plurality of primary substructure pieces.

10. The manufacturing system of claim 9,
wherein at least one primary substructure piece is affixed, fastened, or bonded to one or more alignment structures, and at least one of the one or more alignment structures is disposed in an interior cavity of the primary substructure or in a slot formed in the primary substructure, and the at least one alignment structure comprises an elongated member that is a spar, rod, pipe, tube, beam, profile, mandrel, spline, or another elongated structural element.

11. The manufacturing system according to claim 9,
wherein at least one of the one or more alignment structures is retained within the consolidated part as a permanent component, or wherein at least one of the one or more primary substructure pieces is configured to be removed from the consolidated part after said applying the one or more tows by at least one of: dissolution in an aqueous or solvent-based solution, thermal softening, melting, mechanical removal, or mechanical breakup.

12. The manufacturing system according to claim 9,
wherein at least one of the one or more primary substructure pieces or at least one of the one or more alignment structures comprises one or more interface features configured to facilitate coupling to the rotator or the build surface.

13. A consolidated part, comprising:
- a primary substructure formed from a plurality of primary substructure pieces; and
- an additive manufacturing material disposed directly onto and conforming to at least a portion of an outer surface of the primary substructure, thereby integrating at least two primary substructure pieces of the plurality of primary substructure pieces into the consolidated part.

14. The consolidated part according to claim 13,
wherein at least one primary substructure piece of the plurality of primary substructure pieces is manufactured by a manufacturing process that includes at least one of: powder bed fusion (PBF), material extrusion (ME), composite-based additive manufacturing (CBAM), vat photopolymerization, directed energy deposition (DED), binder jetting, sheet lamination, material jetting, casting, molding, forging, stamping, subtractive machining, trimming, drilling, waterjet cutting, laser cutting, or thermoforming.

15. The consolidated part according to claim 13,
further comprising one or more alignment structures disposed in an interior cavity of the primary substructure or in a slot formed in the primary substructure, at least one of the one or more alignment structures being a spar, rod, pipe, tube, mandrel, spline, or another elongated structural element.
